# EUROPÄISCHE PATENTANMELDUNG

(11) **EP 2 052 824 A2**
(43) Veröffentlichungstag der Anmeldung: **29.04.2009**
(21) Anmeldenummer: 08160847.3
(22) Anmeldetag: 22.07.2008
(51) Int. Cl.: B28C 5/08, B28C 5/12

(54) **Misch- und Fördergerät**

(30) Priorität: 25.10.2007 DE 102007051409
(71) Anmelder: Putzmeister Mörtelmaschinen GmbH, 72631 Aichtal (DE)
(72) Erfinder: Tausch, Werner, 73257 Köngen (DE)
(74) Vertreter: Wolf, Eckhard

(57) **Zusammenfassung**

Die Erfindung betrifft ein Misch- und Fördergerät, insbesondere für Mörtel oder Flüssigbeton als Fördergut. Das Misch- und Fördergerät weist ein Traggestell (10), einen gestellfesten Mischkessel (12), einen Antriebsmotor (14) und ein im Mischkessel drehbar angeordnetes, über den Antriebsmotor (12) und Getriebemittel antreibbares Rührwerk (16) auf. Die Getriebemittel enthalten einen Riementrieb (24) sowie eine Spann- und Kupplungsvorrichtung (34) für den Riementrieb (24). Zur Einstellung der Riemenspannung ist ein Vorspannglied (44) vorgesehen, das gemäß der Erfindung als Pneumatikzylinder ausgebildet ist, der eingangsseitig mit Druckluft unter einem definiert eingestellten Vorspanndruck beaufschlagt ist. Die Druckluftzufuhr kann über ein Umsteuerventil (78) unterbrochen werden. Dem Pneumatikzylinder (44) kommt daher zusammen mit dem Umsteuerventil (78) sowohl eine Spann- als auch eine Kupplungsfunktion zu.

## Beschreibung

Die Erfindung betrifft ein Misch- und Fördergerät, insbesondere für Mörtel oder Beton als Fördergut, mit einem Traggestell, mit einem gestellfesten Mischkessel, mit einem vorzugsweise als Verbrennungsmotor ausgebildeten Antriebsmotor und mit einem im Mischkessel um eine im Wesentlichen horizontale Achse drehbar angeordneten, über den Antriebsmotor und Getriebemittel antreibbaren Rührwerk, welche Getriebemittel einen zwischen einer Abtriebswelle des Antriebsmotors und einer über ein Kreuzgelenk mit dem Rührwerk verbundenen Kardanwelle angeordneten Riementrieb sowie eine Spann- oder Kupplungsvorrichtung für den Riementrieb aufweisen, wobei die Spann- und Kupplungsvorrichtung eine im Abstand vom Kreuzgelenk um eine zur Kardanwelle im Wesentlichen parallele Achse an einem Drehpunkt des Traggestells schwenkbar gelagerte, ein Kardanwellenlager tragende Wippe sowie ein zwischen Traggestell und Wippe eingespanntes Vorspannglied aufweist.

Misch- und Fördergeräte dieser Art dienen in der Bauindustrie zur Mischung und Förderung von Dickstoffen, wie Mörtel, Estrich, Beton oder dergleichen. Das beispielsweise aus Sand und einem Bindemittel bestehende Misch- und Fördergut wird unter Wasserzugabe über eine Einfüllöffnung dem Mischkessel zugeführt. Dort wird bei laufendem Rührwerk das Misch- und Fördergut gründlich durchgemischt. Nach Fertigstellung der Mischung wird das Misch- und Fördergut unter der Einwirkung von Druckluft durch eine Förderleitung gefördert. Da auf die Kardanwelle über das Rührwerk Wechselkräfte wirken, die vor allem beim Eintauchen des Rührwerks in das körnige Misch- und Fördergut entstehen, kommt es bei Geräten dieser Art häufig zu Vibrationen, die zu einer erheblichen Geräuschbildung und zu einer unerwünschten Material-Wechselbelastung führen. Um diesen Nachteil zu vermeiden, ist es bekannt (EP-A-563519), dass der Riementrieb mittels eines als Federelement ausgebildeten Vorspannglieds gespannt wird. Die Spann- und Kupplungsvorrichtung weist zu diesem Zweck eine im Abstand vom Kardangelenk um eine zur Kardanwelle im Wesentlichen parallele Achse an einem Drehpunkt des Traggestells schwenkbar angeordnete, ein Kardanwellenlager tragende Wippe sowie ein zwischen dem Traggestell und der Wippe eingespanntes, als Gasdruckfeder ausgebildetes kombiniertes Feder- und Dämpfungsglied auf. Dabei wird als nachteilig angesehen, dass die Spannkraft der Gasdruckfeder über den zur Verfügung stehenden Nachstellweg nicht konstant ist. Da sich die Riemen mit der Zeit dehnen, nimmt die Spannkraft des Vorspannglieds allmählich ab, so dass die Betriebszuverlässigkeit über einen längeren Zeitraum zu wünschen übrig lässt.

Ausgehend hiervon liegt der Erfindung die Aufgabe zugrunde, das bekannte Misch- und Fördergerät dahingehend zu verbessern, dass das Vorspannglied über den gesamten Nachstellweg des Riementriebs eine konstante Spannkraft einstellt.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass das Vorspannglied als Pneumatikzylinder ausgebildet ist, der eingangsseitig mit Druckluft unter einem definierten Vorspanndruck beaufschlagbar ist. Um dies zu ermöglichen, wird gemäß einer vorteilhaften Ausgestaltung der Erfindung vorgeschlagen, dass der Pneumatikzylinder eingangsseitig an eine Druckluftleitung eines über den Antriebsmotor angetriebenen Drucklufterzeugers angeschlossen ist, wobei zweckmäßig in der zum Pneumatikzylinder führenden Druckluftleitung ein Druckminderer mit einem Druckeinstellorgan angeordnet ist. Um unabhängig vom Nachstellweg des Riementriebs seine definierte konstante Spannkraft einstellen zu können, weist der Druckminderer ein das Druckeinstellorgan in seiner vorgegebenen Einstellposition sperrendes Verriegelungselement auf, das beispielsweise als Plombe ausgebildet sein kann. Eine weitere bevorzugte Ausgestaltung der Erfindung sieht vor, dass in der Druckluftleitung ein Umsteuerventil zur Unterbrechung der Druckluftzufuhr zum Pneumatikzylinder und zu dessen Entlüftung angeordnet ist. Mit dieser Maßnahme ist es möglich, die auf den Riementrieb einwirkende Vorspannung abzustellen und das Rührwerk vom Antriebsmotor abzukoppeln. Zu diesem Zweck kann im Pneumatikzylinder zusätzlich eine entgegen dem Vorspanndruck wirkende Rückholfeder angeordnet werden, die die Spannkraft bei entlüftetem Pneumatikzylinder zurücknimmt.

Eine bevorzugte Ausgestaltung der Erfindung sieht vor, dass die zum Pneumatikzylinder führende Druckluftleitung von einer Hauptleitung abgezweigt ist, die über einen durch den Antriebsmotor angetriebenen, an dem Mischkessel angeschlossenen Drucklufterzeuger mit Förderluft beaufschlagt ist.

Der Pneumatikzylinder weist zweckmäßig die Bauart eines Bremszylinders für Lastkraftwagen auf. Weiter ist es von Vorteil, wenn zwischen der Kardanwelle und dem Rührwerk ein Untersetzungsgetriebe angeordnet ist, das die Drehzahl des Rührwerks auf ein die Konsistenz des Misch- und Förderguts angepasstes Maß herabsetzt.

Zur Einstellung der Vorspannung des erfindungsgemäßen Vorspannglieds wird gemäß der Erfindung vorgeschlagen, dass zunächst die Schwingungsfrequenz der Riemen des Riementriebs unter Verstellung des Vorspanndrucks am Druckeingang des Pneumatikzylinders gemessen und auf einen für die gegebene Anwendung berechneten Vorgabewert einjustiert wird, und dass der dem Vorgabewert entsprechende Einstellwert des Vorspanndrucks beim künftigen Betrieb des Misch- und Fördergeräts beibehalten wird. Der Vorgabewert der Schwingungsfrequenz wird dabei nach Maßgabe des verwendeten Riemenmaterials, der Anzahl der Riemen im Riementrieb, der Leistungsanforderung und dergleichen Parameter ermittelt. Die dem Vorgabewert entsprechende Einstellung des Vorspanndrucks wird bevorzugt an einem Einstellorgan eines Druckminderers festgelegt. Da diese Einstellung üblicherweise werkseitig vorgenommen wird, wird das Einstellorgan in seiner Einstellposition zweckmäßig mit einer Plombe fixiert.

Im Folgenden wird die Erfindung anhand eines in der Zeichnung in schematischer Weise dargestellten Ausführungsbeispiels näher erläutert. Es zeigen
- Fig. 1: ein Schema eines Misch- und Fördergeräts für Dickstoffe;

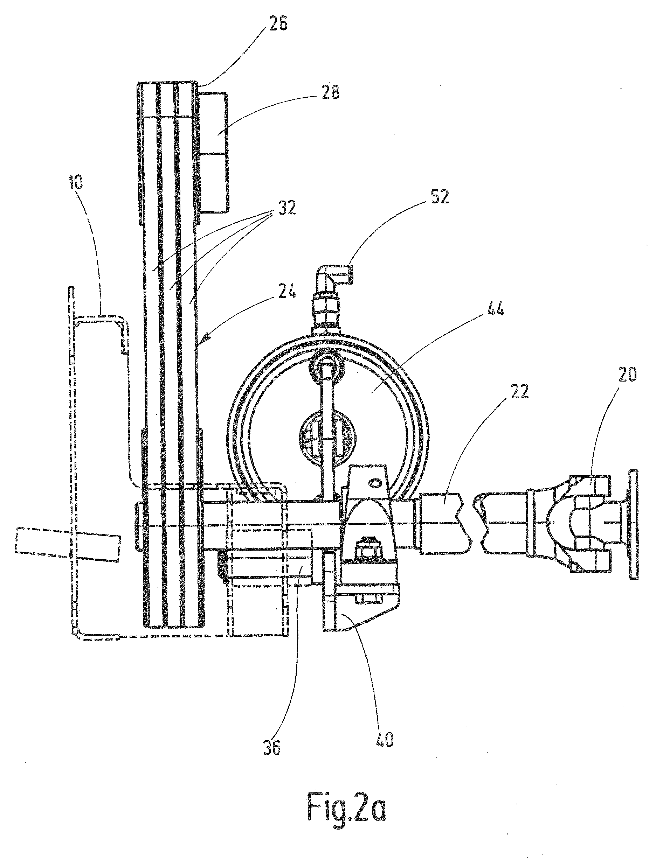

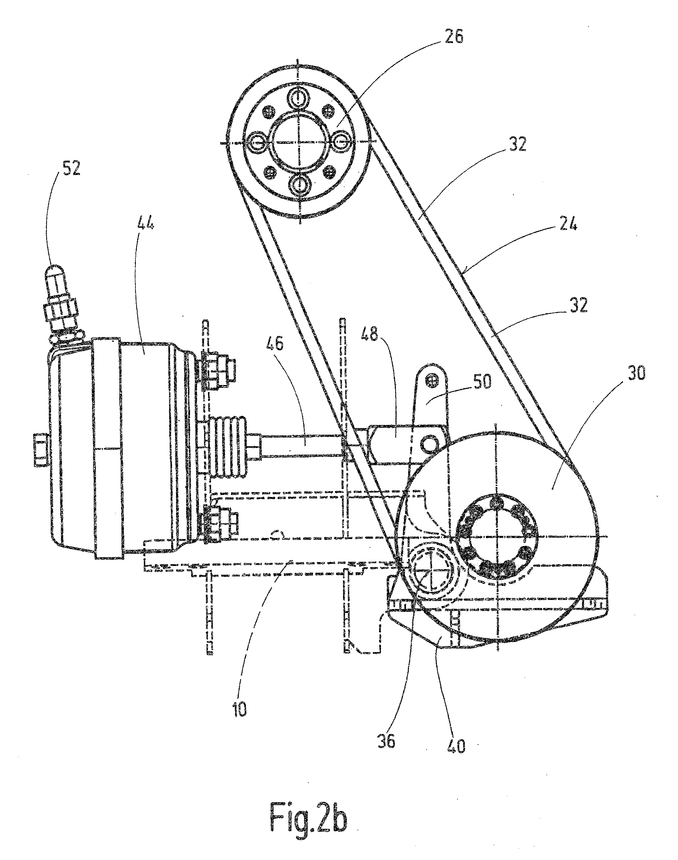

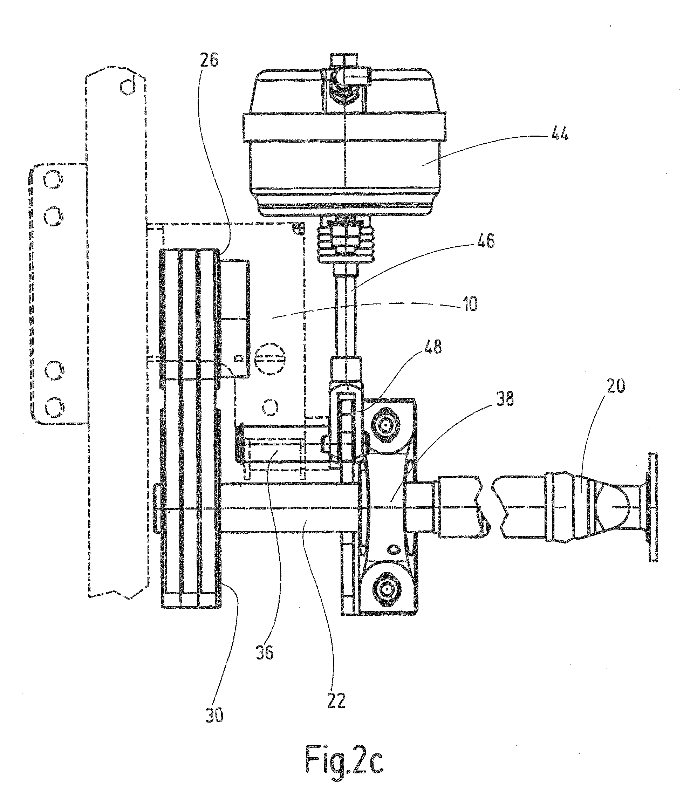

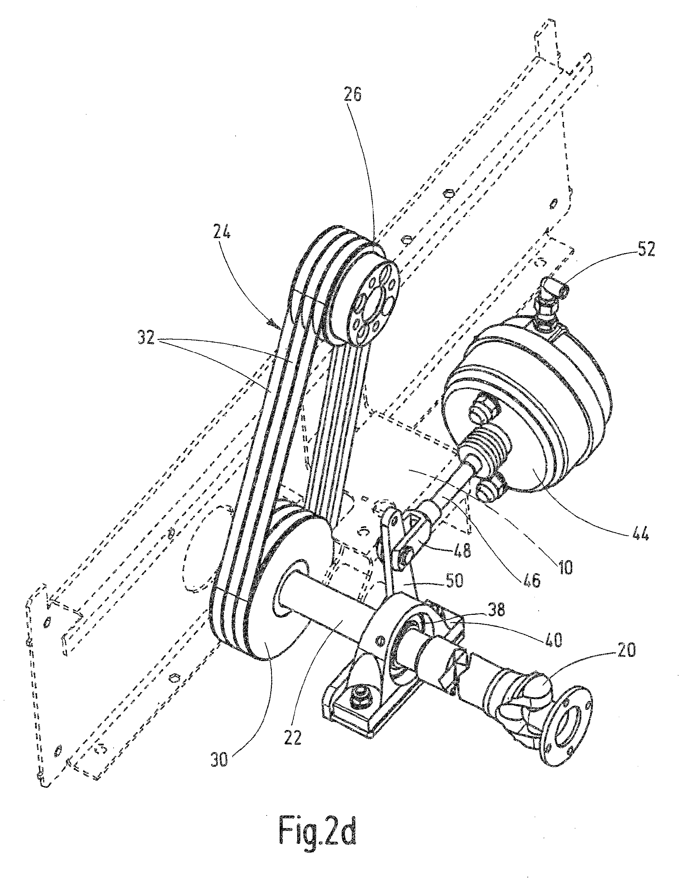

- Fig. 2a bis d: zwei Seitenansichten, eine Draufsicht und eine schaubildliche Darstellung der Spann- und Kupplungsvorrichtung für den Riementrieb des Misch- und Fördergeräts nach Fig. 1 in vergrößerter Darstellung.

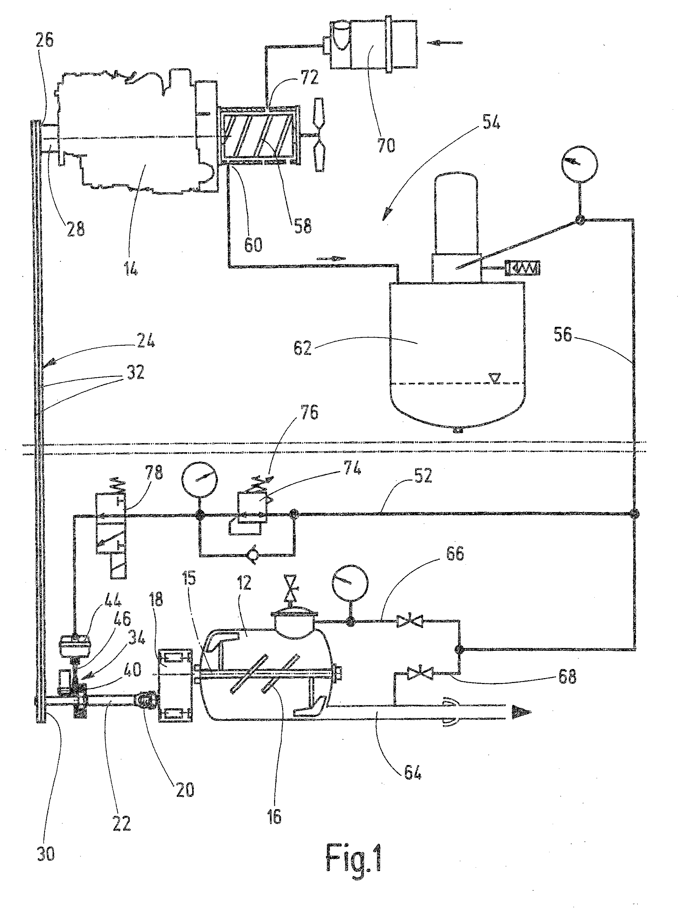

Das in Fig. 1 schematisch dargestellte Misch- und Fördergerät besteht im Wesentlichen aus einem Traggestell 10, einem gestellfesten Mischkessel 12, einem gestellfesten, als Verbrennungsmotor ausgebildeten Antriebsmotor 14 sowie einem im Mischkessel 12 um eine horizontale Achse 15 drehbar angeordneten Rührwerk 16, das über ein Untersetzungsgetriebe 18, ein Kreuzgelenk 20 und eine im Wesentlichen horizontale Kardanwelle 22 sowie einen Riementrieb 24 mit Hilfe des Antriebsmotors 14 antreibbar ist. Die kleinere Riemenscheibe 26 des Riementriebs 24 ist mit der Motorwelle 28 drehbar verbunden, während die größere Riemenscheibe 30 an dem dem Kreuzgelenk 20 gegenüberliegenden freien Ende der Kardanwelle 22 angeordnet ist. Die Keilriemen 32 des Riementriebs 24 werden über eine Spann- und Kupplungsvorrichtung 34 gespannt. Die Spann- und Kupplungsvorrichtung enthält eine an einem Drehpunkt 36 des Traggestells 10 angelenkte, ein Kardanwellenlager 38 aufweisende Wippe 40 sowie ein zwischen dem Traggestell 10 und der Wippe 40 eingespanntes Vorspannglied 44. Bei dem gezeigten Ausführungsbeispiel ist das Vorspannglied als Pneumatikzylinder nach Art eines Bremszylinders für einen Lastkraftwagen ausgebildet. Der Stößel 46 des Pneumatikzylinders 44 ist mit einem stirnseitigen Gabelgelenk 48 an einem Ausleger 50 der Wippe 40 so angelenkt, dass sich die Wippe 40 beim Betätigen des Stößels 46 um die zur Kardanwelle 22 exzentrische, traggestellfeste Drehachse 36 verschwenkt, so dass die Keilriemen 32 des Riementriebs 24 je nach Schwenkrichtung gespannt oder entspannt werden. Das Kreuzgelenk 20 sorgt dafür, dass die Kardanwelle 22 mit der Riemenscheibe 30 spannungsfrei verschwenkt werden kann.

Die Druckluftzufuhr zum Pneumatikzylinder 44 erfolgt über eine Druckluftleitung 52, die von einer an einen Drucklufterzeuger 54 angeschlossenen Hauptleitung 56 abgezweigt ist. Der Drucklufterzeuger 54 umfasst bei dem gezeigten Ausführungsbeispiel einen über den Antriebsmotor 14 angetriebenen Schraubenkompressor 58, dessen Druckanschluss 60 in einen Druckbehälter 62 mündet. Die zu komprimierende Luft wird über einen Luftfilter 70 aus der Atmosphäre über einen Ansaugstutzen 72 dem Schraubenkompressor 58 zugeführt. Die Hauptleitung 56 wird über den Druckbehälter 62 mit Druckluft gespeist, die primär zur Materialförderung aus dem Mischkessel 12 in die Förderleitung 64 verwendet wird. Die Hauptleitung 56 ist zu diesem Zweck an ihrem Ende in eine in den Mischkessel mündende Oberluftleitung 66 und eine in die Förderleitung 64 mündende Unterluftleitung 68 aufgeteilt.

In der von der Hauptleitung 56 abgezweigten Druckluftleitung 52 ist ein Druckminderer 74 angeordnet, an welchem über das Einstellorgan 76 ein definierter Vorspanndruck eingestellt werden kann. Damit kann die über das Vorspannglied 44 auf die Keilriemen 32 des Riementriebs 24 wirkende Spannkraft eingestellt werden. Die Spannkraft richtet sich bei einer gegebenen baulichen Ausbildung des Riementriebs vor allem nach der Leistungsanforderung des durch das Rührwerk 16 gebildeten Nebenverbrauchers. In der Praxis wird die Spannkraft indirekt über die Schwingungsfrequenz der Riemen 32 ermittelt, die anhand vorgegebener Berechnungs- oder Tabellenwerte festgelegt wird. Die Schwingungsfrequenz wird dabei über das Einstellorgan 76 zur Veränderung des Vorspanndrucks so lange variiert, bis der vorgegebene Frequenzwert erreicht ist. Sodann wird das Einstellorgan 76 in der betreffenden Stellung arretiert oder verplombt. Diese Stellung des Einstellorgans 76 kann über die gesamte Lebensdauer des Misch- und Fördergeräts konstant gehalten werden. Auch im Falle eines Riemenwechsels bleibt die Stellung unverändert.

In der Druckluftleitung 52 befindet sich außerdem ein als Wegeventil ausgebildetes Umsteuerventil 78, das zwischen einer Durchgangsstellung und einer Entlüftungsstellung verstellbar ist. Der Pneumatikzylinder 44 wird in der Durchgangsstellung mit dem Vorspanndruck beaufschlagt, während er in der Sperrstellung entlüftet wird. Innerhalb des Pneumatikzylinders 44 befindet sich noch eine nicht dargestellte, entgegen dem Vorspanndruck wirkende Rückholfeder, die dafür sorgt, dass die Riemen 32 des Riementriebs 24 über den sich in seine Ausgangsstellung zurückbewegenden Stößel 46 des Pneumatikzylinders 44 entspannt werden, so dass die Kardanwelle 22 von der Motorwelle 28 abgekuppelt wird. Dem Vorspannglied 44 kommt somit unter zusätzlicher Berücksichtigung des Umsteuerventils 78 eine Spann- und Kupplungsfunktion zu.

Zusammenfassend ist folgendes festzuhalten: Die Erfindung betrifft ein Misch- und Fördergerät, insbesondere für Mörtel oder Flüssigbeton als Fördergut. Das Misch- und Fördergerät weist ein Traggestell 10, einen gestellfesten Mischkessel 12, einen Antriebsmotor 14 und ein im Mischkessel drehbar angeordnetes, über den Antriebsmotor 12 und Getriebemittel antreibbares Rührwerk 16 auf. Die Getriebemittel enthalten einen Riementrieb 24 sowie eine Spann- und Kupplungsvorrichtung 34 für den Riementrieb 24. Zur Einstellung der Riemenspannung ist ein Vorspannglied 44 vorgesehen, das gemäß der Erfindung als Pneumatikzylinder ausgebildet ist, der eingangsseitig mit Druckluft unter einem definiert eingestellten Vorspanndruck beaufschlagt. Die Druckluftzufuhr kann über ein Umsteuerventil 78 unterbrochen werden. Dem Pneumatikzylinder 44 kommt daher zusammen mit dem Umsteuerventil 78 sowohl eine Spann- als auch eine Kupplungsfunktion zu.

## Patentansprüche

1. Misch- und Fördergerät insbesondere für Mörtel oder Flüssigbeton als Fördergut, mit einem Traggestell (10), mit einem gestellfesten Mischkessel (12), mit einem vorzugsweise als Verbrennungsmotor ausgebildetem Antriebsmotor (14) und mit einem im Mischkessel (12) um eine im Wesentlichen horizontale Achse drehbar angeordneten, über den Antriebsmotor (14) und Getriebemittel antreibbaren Rührwerk (16), welche Getriebemittel einen zwischen einer Abtriebswelle (28) des Antriebsmotors (14) und einer über ein Kreuzgelenk (20) mit dem Rührwerk (16) verbundenen Kardanwelle (22) angeordneten Riementrieb sowie eine Spann- und Kupplungsvorrichtung (34) für den Riementrieb (24) aufweisen, wobei die Spann- und Kupplungsvorrichtung (34) eine im Abstand vom Kreuzgelenk (20) um eine zur Kardanwelle im Wesentlichen parallele Achse an einem Drehpunkt (36) des Traggestells (10) schwenkbar gelagerte, ein Kardanwellenlager (38) tragende Wippe (40) sowie ein zwischen Traggestell (10) und Wippe (40) eingespanntes Vorspannglied (44) aufweist, **dadurch gekennzeichnet, dass** das Vorspannglied (44) als Pneumatikzylinder ausgebildet ist, der eingangsseitig mit Druckluft unter einem definierten Vorspanndruck beaufschlagt ist.

2. Misch- und Fördergerät nach Anspruch 1, **dadurch gekennzeichnet, dass** der Pneumatikzylinder (44) eingangsseitig an eine Druckluftleitung (52) eines über den Antriebsmotor (14) angetriebenen Drucklufterzeugers (54) angeschlossen ist.

3. Misch- und Fördergerät nach Anspruch 2, **dadurch gekennzeichnet, dass** in der Druckluftleitung (52) ein Druckminderer (74) mit einem Druckeinstellorgan (76) angeordnet ist.

4. Misch- und Fördergerät nach Anspruch 3, **dadurch gekennzeichnet, dass** das Druckeinstellorgan (76) des Druckminderers (74) in seiner Einstellposition gesperrt oder plombiert ist.

5. Misch- und Fördergerät nach einem der Ansprüche 2 bis 4, **dadurch gekennzeichnet, dass** in der Druckluftleitung (52) ein Umsteuerventil (78) zur Unterbrechung der Druckluftzufuhr zum Pneumatikzylinder (44) angeordnet ist.

6. Misch- und Fördergerät nach einem der Ansprüche 1 bis 5, **dadurch gekennzeichnet, dass** im Pneumatikzylinder (44) eine entgegen dem Vorspanndruck wirkende Rückholfeder angeordnet ist.

7. Misch- und Fördergerät nach einem der Ansprüche 1 bis 6, **dadurch gekennzeichnet, dass** zwischen der Kardanwelle (22) und dem Rührwerk (16) ein Untersetzungsgetriebe (18) angeordnet ist.

8. Misch- und Fördergerät nach einem der Ansprüche 2 bis 7, **dadurch gekennzeichnet, dass** die zum Pneumatikzylinder (44) führende Druckluftleitung (52) von einer mit Förderluft aus dem Drucklufterzeuger (54) beaufschlagten, an den Mischkessel (12) angeschlossenen Hauptleitung (56) abgezweigt ist.

9. Misch- und Fördergerät nach einem der Ansprüche 1 bis 8, **dadurch gekennzeichnet, dass** der Pneumatikzylinder (44) die Bauart eines Bremszylinders für Lastkraftwagen aufweist.

10. Verfahren zur Einstellung der Vorspannung des Vorspannglieds (44) eines Misch- und Fördergeräts nach einem der Ansprüche 1 bis 9, **dadurch gekennzeichnet, dass** die Schwingungsfrequenz des Riemens oder der Riemen (32) des Riementriebs (24) unter Verstellung des Vorspanndrucks am Druckeingang des Pneumatikzylinders (44) gemessen und auf einen berechneten Vorgabewert einjustiert wird, und dass der dem Vorgabewert entsprechende Einstellwert des Vorspanndrucks beim Betrieb des Misch- und Fördergeräts unverändert beibehalten wird.

11. Verfahren nach Anspruch 10, **dadurch gekennzeichnet, dass** die dem Vorgabewert entsprechende Einstellung des Vorspanndrucks an einem Druckeinstellorgan (76) eines Druckminderers (74) festgelegt wird.

12. Verfahren nach Anspruch 11, **dadurch gekennzeichnet, dass** das Druckeinstellorgan (76) nach dem Einstellvorgang plombiert wird.
